# EUROPÄISCHE PATENTSCHRIFT

(11) **EP 1 506 846 B1**
(45) Veröffentlichungstag und Bekanntmachung des Hinweises auf die Patenterteilung: **11.10.2006**
(21) Anmeldenummer: 03018349.5
(22) Anmeldetag: 13.08.2003
(51) Int. Cl.: B25F 5/00

(54) **Handwerkzeugmaschine**
Portable power tool
Outil portable motorisé

(43) Veröffentlichungstag der Anmeldung: 16.02.2005
(73) Patentinhaber: A & M Electric Tools GmbH, 71364 Winnenden (DE)
(72) Erfinder: Geis, Wilhelm, Dipl.-Ing. FH, 71397 Leutenbach (DE); Felger, Reiner, Dipl.-Ing. BA, 71404 Korb (DE)
(74) Vertreter: Riedel, Peter

(56) Entgegenhaltungen:
- WO-A-93/15863
- DE-A- 2 511 469
- DE-A- 3 904 085

## Beschreibung

Die Erfindung betrifft eine Handwerkzeugmaschine, insbesondere eine Bohrmaschine, eine Schlagbohrmaschine oder dergleichen der im Oberbetriff des Anspruchs 1 angegebenen Gattung.

Eine solche Handwerkzeugmaschine ist aus WO 93/15863 bekannt.

Bei Handwerkzeugmaschinen mit einem Getriebe mit mehreren Gängen ist es bekannt, daß eine Schaltscheibe vorgesehen ist, mit der zwischen den Gängen des Getriebes umgeschaltet werden kann. Zur drehfesten Verbindung der Schaltscheibe mit einem Zahnrad sind dabei üblicherweise Mitnehmer vorgesehen. Beim Umschalten muß die Stellung der Schaltscheibe und die des Zahnrads so aufeinander abgestimmt werden, daß der Mitnehmer in Eingriff mit dem Zahnrad bzw. mit der Schaltscheibe kommen kann. Bei bekannten Handwerkzeugmaschinen sind die Mitnehmer in Richtung der Drehachse der Zahnräder in der Schaltscheibe gefedert gelagert. Die Schaltscheibe wird bis an ein Zahnrad gedrückt, wodurch die Federn der Mitnehmer bei Anlage der Mitnehmer an der Stirnseite des Zahnrads gespannt werden. Beim Weiterdrehen des Zahnrads kommen die Mitnehmer deckungsgleich über für die Mitnehmer vorgesehene Öffnungen zu liegen und rasten aufgrund der Federung in die Öffnungen ein, so daß die Schaltscheibe mit dem Zahnrad drehfest verbunden ist. Die Federung der einzelnen Mitnehmer ist in der Montage aufwendig. Aufgrund der Federung ist die Baugröße der Schaltscheibe relativ groß. Insbesondere in Richtung der Drehachse kann die Baugröße der Schaltscheibe nicht verringert werden. Üblicherweise sind mehrere, insbesondere drei Mitnehmer vorgesehen. Dabei muß für jeden Mitnehmer eine separate Federung vorgesehen werden.

Aus der WO 93/15863 ist eine Handwerkzeugmaschine bekannt, bei der der Schaltgriff über eine Feder auf einen Schieber wirkt, der zwischen den Gängen schaltet. Beim Umschalten wird der Schaltgriff mit der im Schaltgriff gelagerten Druckfeder um 180° gedreht, so daß der Schaltgriff nun auf den gegenüberliegenden Schenkel des U-förmig ausgebildeten Schiebers wirkt.

Aus der DE 25 11 469 A1 ist eine Schaltvorrichtung für eine Handwerkzeugmaschine bekannt, bei der der Schaltgriff direkt auf eine Schaltscheibe wirkt und diese zwischen zwei bzw. drei Schaltstellungen verstellt. Die Schaltscheibe ist dabei gegenüber dem Gehäuse gefedert gelagert.

Aus der DE 39 04 085 A1 ist eine Einrichtung zum Umschalten des Getriebes eines Elektrowerkzeugs bekannt, bei dem ein Schaltschieber über ein bügelförmiges Federelement auf ein Kunststoffzahnrad wirkt und dieses zwischen zwei Schaltstellungen verschiebt.

Der Erfindung liegt die Aufgabe zugrunde, eine Handwerkzeugmaschine der gattungsgemäßen Art zu schaffen, deren Getriebe einen einfachen Aufbau und eine geringe Baugröße besitzt.

Diese Aufgabe wird durch eine Handwerkzeugmaschine mit den Merkmalen des Anspruchs 1 gelöst.

Dadurch, daß die Schaltvorrichtung über eine Federung auf die Schaltscheibe wirkt, ist eine Federung der einzelnen Mitnehmer nicht mehr notwendig. Da nicht jeder Mitnehmer separat gefedert wird, ist nur eine Feder für die Federung notwendig.

Es ist vorgesehen, daß die Federung außerhalb der Schaltscheibe angeordnet ist. Dadurch kann die Schaltscheibe schmaler ausgebildet werden. Die Baulänge der Handwerkzeugmaschine in Richtung der Drehachse wird dadurch verringert. Da die Federung nicht in die Schaltscheibe integriert ist, ist die Montage vereinfacht. Die Federung ist insbesondere radial außerhalb der Schaltscheibe angeordnet. Dadurch kann die Baulänge der Handwerkzeugmaschine in Richtung der Drehachse verkleinert werden.

Zweckmäßig umfaßt die Federung eine Feder, die zwischen zwei in Richtung der Drehachse beweglichen Schiebern gelagert ist. Vorteilhaft besitzt ein erster Schieber einen Betätigungsabschnitt, der auf eine Seite der Schaltscheibe wirkt und einen Druckabschnitt, an dem die Feder angreift. Es ist vorgesehen, daß ein zweiter Schieber einen Schaltabschnitt, auf den die Schaltvorrichtung wirkt, und einen Druckabschnitt, an dem die Feder angreift, besitzt. Über die Schaltvorrichtung wird der zweite Schieber über seinen Schaltabschnitt in Richtung der Drehachse des Zahnrads verschoben. Über seinen Druckabschnitt wirkt der Schieber auf die Feder. Am zweiten Ende der Feder ist der Druckabschnitt des ersten Schiebers angeordnet, der mit seinem Betätigungsabschnitt auf eine Seite der Schaltscheibe wirkt. Der Betätigungsabschnitt des zweiten Schiebers drückt somit auf die Schaltscheibe, bis diese mit ihrem Mitnehmer am Zahnrad einrastet. Vorteilhaft ist die Feder eine Druckfeder. Zweckmäßig sind die Feder und die Schieber an einer gehäusefesten Führung gelagert. Hierdurch kann sichergestellt werden, daß die Schieber nur in Richtung der Drehachse beweglich sind. Ein Verkanten der Schieber kann hierdurch vermieden werden. Eine zusätzliche Führung kann dadurch gebildet werden, daß an einem Schieber eine Gleitfläche ausgebildet ist, mit der sich der Schieber am Gehäuse abstützt.

Um die Schaltscheibe in beide Richtungen zu federn, sind zwei Schieber vorgesehen, wobei jeder Schieber einen Betätigungsabschnitt, einen Druckabschnitt und einen Schaltabschnitt besitzt. Je nach Verschieberichtung sind der Betätigungsabschnitt und der Druckabschnitt von einem und der Druckabschnitt und der Schaltabschnitt von dem anderen Schieber im Einsatz. Vorteilhaft ist zwischen den Schaltabschnitten der beiden Schieber ein Spalt gebildet, in den ein Zapfen der Schaltvorrichtung greift. Hierdurch können die Schieber auf einfache Weise verschoben werden. Die Schaltvorrichtung umfaßt zweckmäßig ein drehbar gelagertes Schaltelement und einen Zapfen, wobei der Zapfen exzentrisch zur Drehachse des Schaltelements angeordnet ist. Durch Drehung des Schaltelements bewegt sich der Zapfen in dem Spalt zwischen den Schaltabschnitten der beiden Schieber in Richtung der Drehachse und in einer Richtung senkrecht hierzu. Zweckmäßig besitzt der Schaltabschnitt eine etwa senkrecht zur Drehachse des Schaltelements ausgerichtete Schaltfläche.

Um ein Umschalten zwischen zwei Gängen des Getriebes zu ermöglichen, ist vorgesehen, daß die Schaltscheibe in der ersten Schaltstellung mit einem ersten Zahnrad und in der zweiten Schaltstellung mit einem zweiten Zahnrad verbunden ist. Der Mitnehmer ist dabei insbesondere an der Schaltscheibe angeordnet. Vorteilhaft durchragt der Mitnehmer die Schaltscheibe und steht an beiden Seiten der Schaltscheibe über die Stirnseiten der Schaltscheibe über. Ein Mitnehmer kann dadurch sowohl mit dem einen als auch mit dem anderen Zahnrad eine drehfeste Verbindung herstellen. Eine einfache Ausgestaltung ergibt sich, wenn der Mitnehmer ein Stift ist. Um eine gute Drehmomentübertragung zu erreichen, ist vorgesehen, daß drei Mitnehmer an der Schaltscheibe festgelegt sind.

Vorteilhaft besitzt die Schaltscheibe eine Mitnahmevorrichtung, die ein Drehmoment von den Mitnehmern auf die Abtriebswelle des Getriebes überträgt und bei einem Drehmoment von der Abtriebswelle die Abtriebswelle blockiert. Derartige Mitnahmevorrichtungen werden bei Handwerkzeugmaschinen eingesetzt, um ein einfaches Lösen eines Werkzeuges zu ermöglichen. Da die Spindel durch die Mitnahmevorrichtung beim Drehen an der Spindel automatisch blockiert, kann ein an der Spindel festgelegtes Werkzeug gelöst werden, ohne daß die Spindel mitdreht. Ein Drehmoment vom Motor, das über das Getriebe auf die Mitnehmer der Schaltscheibe übertragen wird, wird über die Mitnahmevorrichtung auf die Abtriebswelle und die Spindel übertragen. Durch die Federung der gesamten Schaltscheibe ist in der Schaltscheibe ausreichend Bauraum vorhanden, um die Mitnahmevorrichtung zu integrieren. Vorteilhaft besitzt die Schaltscheibe einen Außenring, der am Gehäuse der Handwerkzeugmaschine drehfest gehalten ist. Die Schaltscheibe besitzt zweckmäßig ein Innenelement, das mit der Abtriebswelle über eine Verzahnung drehfest verbunden ist. Insbesondere besitzt die Schaltscheibe einen Antriebsring, der mit den Mitnehmern drehfest verbunden ist. Vorteilhaft umfaßt die Mitnahmevorrichtung mindestens ein Rollenpaar, wobei die beiden Rollen des Rollenpaars in Umfangsrichtung zur Drehachse benachbart zueinander angeordnet sind und am Innenumfang des Außenrings und an einer am Außenumfang des Innenelements gebildeten Nockenkontur anliegen, wobei zwischen den Rollen eine Feder angeordnet ist. Vorteilhaft sind in Umfangsrichtung zur Drehachse benachbart zu dem Rollenpaar Druckstücke angeordnet, die drehfest mit dem Antriebsring verbunden sind.

Ein Ausführungsbeispiel der Erfindung wird im folgenden anhand der Zeichnung erläutert. Es zeigen:
- Fig. 1: eine perspektivische Darstellung einer Bohrmaschine,
- Fig. 2: eine perspektivische Darstellung des Getriebes einer Bohrmaschine in einer ersten Schaltstellung,
- Fig. 3: eine Seitenansicht auf das Getriebe aus Fig. 2 in Richtung des Pfeils III in Fig. 2,
- Fig. 4: eine Seitenansicht auf das Getriebe aus Fig. 3 in Richtung des Pfeils IV in Fig. 3,
- Fig. 5: das Getriebe aus Fig. 4 in einer zweiten Schaltstellung,
- Fig. 6: eine perspektivische Darstellung einer Federung,
- Fig. 7: eine Seitenansicht der Federung aus Fig. 6,
- Fig. 8: eine Ansicht auf die Federung in Richtung des Pfeils VIII in Fig. 9,
- Fig. 9: eine Seitenansicht auf die Federung in Richtung des Pfeils IX in Fig. 7,
- Fig. 10: eine Seitenansicht auf die Federung in Richtung des Pfeils X in Fig. 9,
- Fig. 11: eine Seitenansicht einer Schaltscheibe,
- Fig. 12: einen Schnitt durch die Schaltscheibe entlang der Linie XII-XII in Fig. 11,
- Fig. 13: einen Schnitt durch die Schaltscheibe in Richtung der Linie XIII-XIII in Fig. 12,
- Fig. 14: die Schaltscheibe aus den Fig. 11 bis 13 in Explosionsdarstellung.

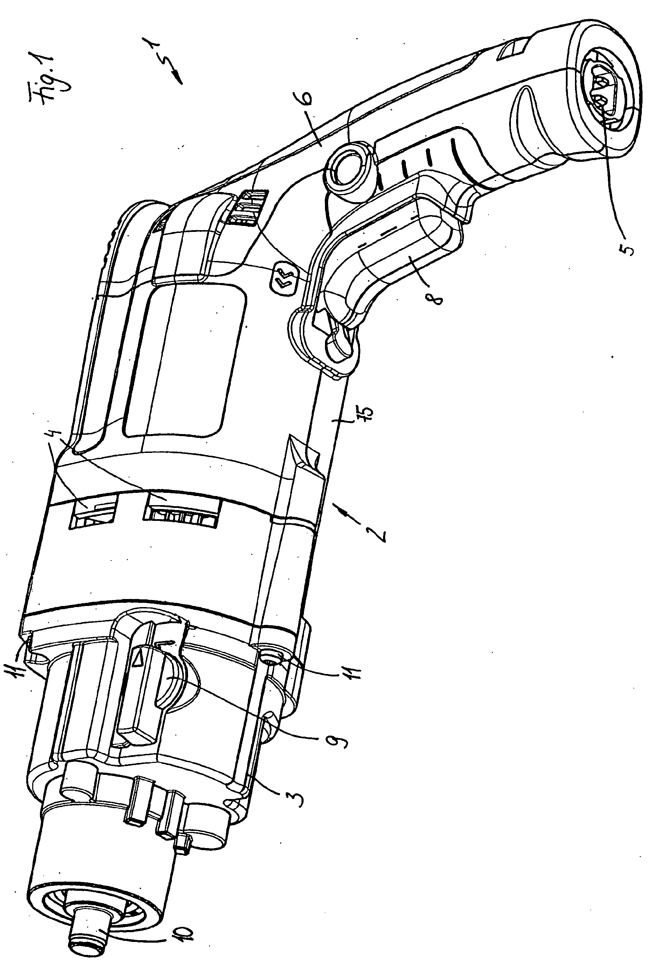

In Fig. 1 ist als Beispiel für eine Handwerkzeugmaschine eine Bohrmaschine 1 dargestellt. Anstatt der Bohrmaschine kann die Erfindung auch bei einer anderen Handwerkzeugmaschine wie beispielsweise einer Schlagbohrmaschine oder dergleichen zum Einsatz kommen. Die Bohrmaschine 1 besitzt ein Gehäuse 2 mit einem Griff 6, der an einem Gehäuseteil 75 angeformt ist. Im Bereich des Griffs 6 ist ein Betätigungshebel 8 festgelegt. Die Bohrmaschine 1 besitzt einen Elektromotor, dem über einen Steckkontakt 5 am Griff 6 Strom zugeführt werden kann. Am Gehäuseteil 75 ist an der dem Griff 6 abgewandten Seite der Getriebekasten 3 mit drei Schrauben 11, von denen zwei in Fig. 1 gezeigt sind, festgelegt. Am Getriebekasten 3 ist ein Schaltgriff 9 drehbar gelagert. Der Schaltgriff 9 besitzt zwei Schaltpositionen, die gegeneinander um 180° gedreht sind. An der dem Gehäuseteil 75 zugewandten Seite besitzt der Getriebekasten 3 Lüftungsschlitze 4, durch die vom Lüfterrad der Bohrmaschine 1 Kühlluft gefördert wird. Der Motor treibt über ein im Getriebekasten 3 angeordnetes Getriebe die Spindel 10 rotierend an.

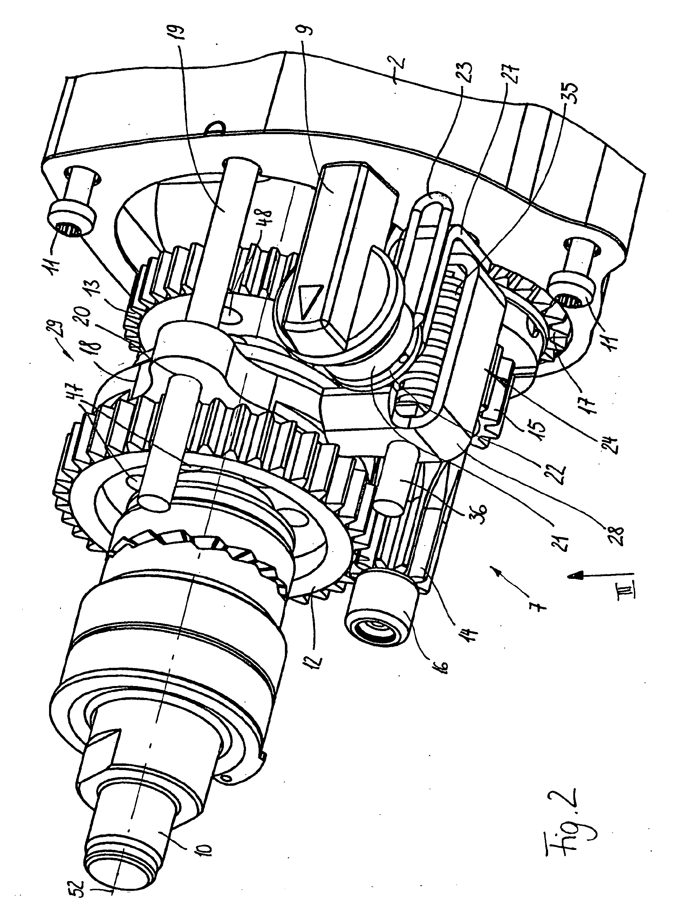

In Fig. 2 ist das Getriebe 7 perspektivisch dargestellt. Der Motor der Bohrmaschine 1 treibt über ein Ritzel und über das fünfte Zahnrad 17 die Antriebswelle 16 rotierend an. Auf der Antriebswelle 16 ist ein drittes Zahnrad 14 und ein viertes Zahnrad 15 festgelegt, wobei der Durchmesser des vierten Zahnrads 15 größer als der des dritten Zahnrads 14 ist. Das dritte Zahnrad 14 treibt ein erstes Zahnrad 12 rotierend an und das vierte Zahnrad 15 ein zweites Zahnrad 13. Das zweite Zahnrad 13 besitzt einen kleineren Durchmesser als das erste Zahnrad 12. Bei einer Übertragung des Drehmoments von der Antriebswelle 16 über die Zahnräder 14 und 12 ergibt sich somit eine kleinere Übersetzung als bei einer Übertragung über die Zahnräder 15 und 13, wobei die Zahnräder 12 und 13 größer als die Zahnräder 14 und 15 sind und sich somit die Zahnräder 12 und 13 schneller als die Antriebswelle 16 drehen. Das erste Zahnrad 12 besitzt Bohrungen 47 und das zweite Zahnrad 13 besitzt Bohrungen 48. Zwischen den Zahnrädern 12 und 13 ist eine Schaltscheibe 18 angeordnet. Die Schaltscheibe 18 besitzt in Fig. 2 nicht gezeigte Stifte 37, die in radialem Abstand zur Drehachse der Spindel 10, die der Drehachse 52 der Zahnräder 12 und 13 entspricht, angeordnet sind und die in Richtung der Drehachse 52 ausgerichtet sind. Die Stifte 37 können in die Bohrungen 47 bzw. 48 ragen und dadurch die Schaltscheibe 18 mit dem Zahnrad 12 bzw. dem Zahnrad 13 drehfest verbinden. Die Schaltscheibe 18 ist in Richtung der Drehachse der Zahnräder 12 und 13 verschieblich gelagert. Hierzu ist eine Führung 19 vorgesehen, die durch eine Bohrung 20 in der Schaltscheibe 18 ragt. Die Schaltscheibe 18 ist dabei an zwei Führungen 19 gehalten, die beidseitig der Drehachse der Zahnräder 12 und 13 angeordnet sind. Die Führungen 19 sind am Gehäuse 2 gehalten und stabförmig ausgebildet. In Fig. 2 ist die Schaltscheibe 18 in einer ersten Schaltstellung 29 dargestellt, in der sie drehfest mit dem ersten Zahnrad 12 verbunden ist.

Zum Umschalten zwischen den beiden Schaltstellungen der Schaltscheibe 18 ist der Schaltgriff 9 vorgesehen. Der Schaltgriff 9 ragt mit einem Bolzen 21 ins Gehäuse 2. Der Bolzen 21 besitzt eine umlaufende Nut 22, in deren Nutgrund eine Nockenkontur ausgebildet ist. In die Nut 22 ragt eine Feder 23, die beidseitig an der Nockenkontur anliegt und mit der Nockenkontur Schaltpositionen des Schaltgriffs 9 festlegt. Die beiden Schaltpositionen des Schaltgriffs 9 sind dabei um 180° zueinander gedreht. Der Schaltgriff 9 betätigt eine Federung 24, über die die Schaltscheibe 18 zwischen der ersten Schaltstellung 29 und einer zweiten Schaltstellung in Richtung der Drehachse 52 der Zahnräder 12 und 13 verschoben werden kann. Die Federung 24 ist radial außerhalb der Schaltscheibe 18 und der Zahnräder 12 und 13 angeordnet. Die Federung 24 ist über eine Führung 36 am Gehäuse 2 gehalten. Die Führung 36 ist stabförmig ausgebildet. Die Führung 24 besitzt einen ersten Schieber 27 und einen zweiten Schieber 28, zwischen denen eine Feder 35 gelagert ist. Die Feder 35 ist als Druckfeder ausgebildet und koaxial zur Führung 36 angeordnet.

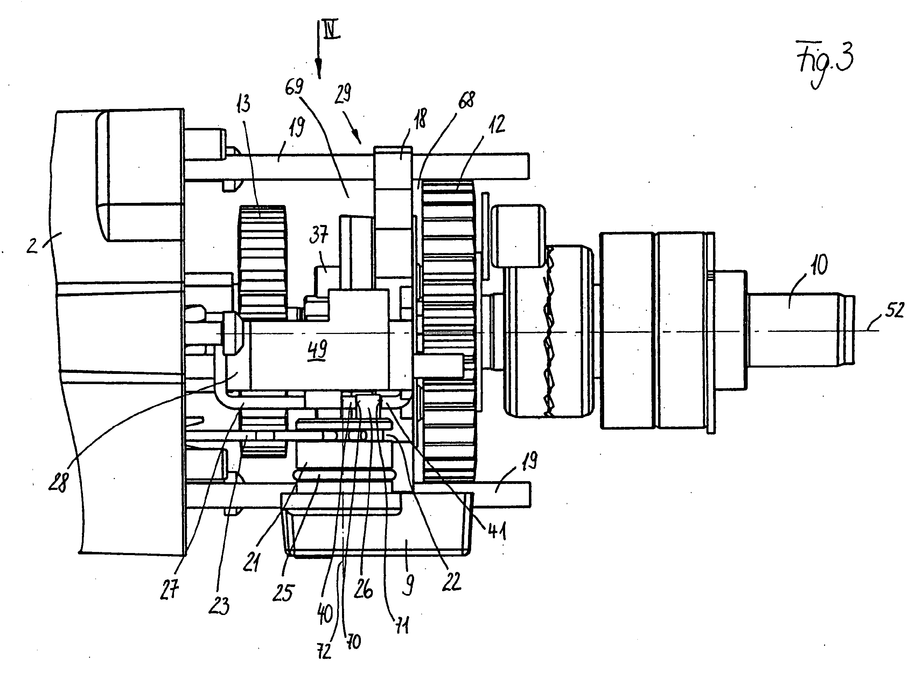

Wie die Seitenansicht in Fig. 3 zeigt, ist der Schaltgriff 9 um die Drehachse 72 im in Fig. 3 nicht gezeigten Getriebegehäuse 3 drehbar gelagert. Der Bolzen 21 besitzt eine Dichtung 25 zur Abdichtung gegenüber dem Gehäuse 2. Auf der der Federung 24 zugewandten Seite ist am Bolzen 21 ein Zapfen 26 angeformt. Der Zapfen 26 ist exzentrisch zur Drehachse 72 angeordnet. Der Zapfen 26 ragt in einen Spalt zwischen den beiden Schiebern 27 und 28 und liegt an einer Schaltfläche 70 an einem Schaltabschnitt 40 am ersten Schieber 27 und an einer Schaltfläche 71 an einem Schaltabschnitt 41 am zweiten Schieber 47 an. Der zweite Schieber 28 besitzt eine Gleitfläche 49, die am Getriebekasten 3 anliegt und über die der zweite Schieber 28 in Längsrichtung der Drehachse 52 der Zahnräder 12 und 13 geführt ist. In der in Fig. 3 gezeigten ersten Schaltstellung 29 ragen von der Seite 69 der Schaltscheibe 18 drei Stifte 37 in Richtung auf das zweite Zahnrad 13. Auf der gegenüberliegenden Seite 68 der Schaltscheibe 18 ragen die Mitnehmer 37 in die Bohrungen 47 im ersten Zahnrad 12 und verbinden so die Schaltscheibe 18 drehfest mit dem ersten Zahnrad 12.

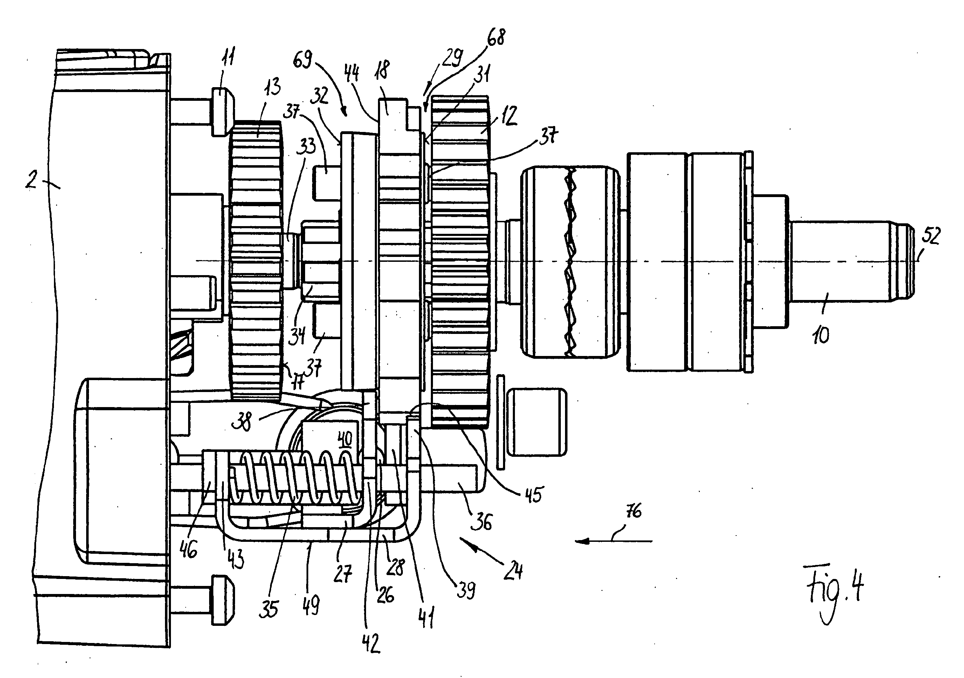

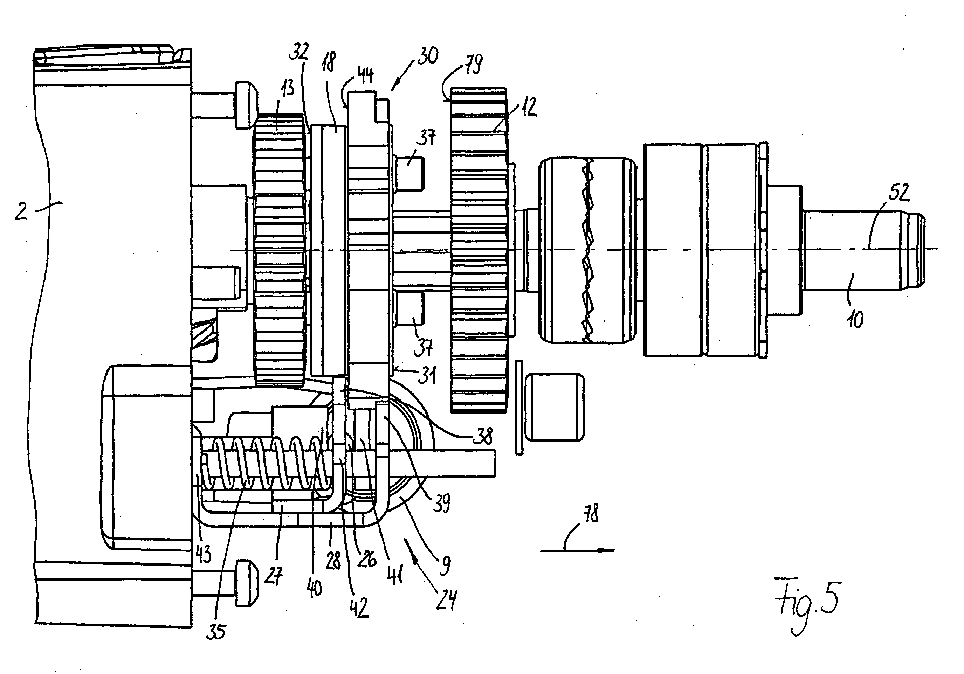

Wie Fig. 4 zeigt, ist die Schaltscheibe 18 auf einer Abtriebswelle 33 in Richtung der Drehachse 52 verschieblich gelagert. Die Schaltscheibe 18 ist dabei über eine Verzahnung 34 drehfest mit der Abtriebswelle 33 verbunden. An der dem zweiten Zahnrad 13 zugewandten Seite 69 der Schaltscheibe 18 ragen die Stifte 37 über die Stirnseite 32 der Schaltscheibe 18 hinaus. Auf der gegenüberliegenden Seite 68 ragen die Stifte 37 über die Stirnseite 31 in die Bohrungen 47 im ersten Zahnrad 12. Die Stirnseiten 31, 32 der Schaltscheibe 18 sind dabei die Flächen, die in den Schaltstellungen 29, 30 benachbart zu den Zahnrädern 12 bzw. 13 angeordnet sind. Die Stifte 37 durchragen die Schaltscheibe 18 vollständig. In der ersten Schaltstellung 29 ist der Zapfen 26 am Schaltgriff 9 in seiner der Spindel 10 bzw. dem ersten Zahnrad 12 zugewandten, dem Griff 6 abgewandten Position. Beim Drehen des Schaltgriffs 9 von der in Fig. 4 gezeigten zu der in Fig. 5 gezeigten Schaltposition, in der der Zapfen 26 in seiner der Spindel 10 abgewandten, dem Griff 6 und dem ersten Zahnrad 13 zugewandten Position ist, drückt der Zapfen 26 den Schaltabschnitt 40 am ersten Schieber 27 in Richtung des Pfeils 76, also etwa in Richtung auf den Handgriff 6 der Bohrmaschine 1. Über den Druckabschnitt 42 des ersten Schiebers 27 wird die Feder 35 zusammengedrückt. Die Feder 35 drückt auf den Druckabschnitt 43 des zweiten Schiebers 28 in Richtung des Pfeils 76. Dadurch drückt der Betätigungsabschnitt 39 des zweiten Schiebers 28, der an der Seite 68 der Schaltscheibe 18 angreift, die Schaltscheibe 18 in Richtung des Pfeils 76 zum zweiten Zahnrad 13. Liegen die Stifte 37 nicht deckungsgleich zu den Bohrungen 48 im zweiten Zahnrad 13, werden die Stifte 37 gegen die Stirnseite 77 des Zahnrads 13 gedrückt und die Feder 35 bleibt gespannt. Sobald die Bohrungen 48 zu den Mitnehmern 37 koaxial ausgerichtet sind, rasten die Mitnehmer 37 in die Bohrungen 48 ein und die Schaltscheibe 18 wird von der Feder 35 gegen das zweite Zahnrad 13 gedrückt. Über die Federung 24 werden die Schaltscheibe 18 und das Zahnrad 13 so synchronisiert. Am ersten Schieber 27 ist ein Anschlag 46 angeformt, an dem der Druckabschnitt 43 des zweiten Schiebers 28 anliegt. Der Anschlag 46 begrenzt die maximale Länge der Druckfeder 35 und stellt dadurch sicher, daß der Zapfen 26 durch die Kraft der Feder 35 nicht zwischen den Schaltabschnitten 40 und 41 der Schieber 27 und 28 festgeklemmt wird. Beim Umschalten von der in Fig. 5 gezeigten zweiten Schaltstellung 30 in die erste Schaltstellung 29 wird der Zapfen 26 in Richtung des Pfeils 78 bewegt. Der Zapfen 26 drückt den Schaltabschnitt 41 in Richtung des Pfeils 78. Der zweite Schieber 28 wird dadurch in Richtung des Pfeils 78 bewegt. Über den Druckabschnitt 43 wird die Feder 35 gespannt. Die Feder 35 wirkt auf den Druckabschnitt 42 des ersten Schiebers 27, der mit seinem Betätigungsabschnitt 38 an einem Absatz 44 an der Seite 69 der Schaltscheibe 18 anliegt und die Schaltscheibe 18 in Richtung auf das erste Zahnrad 12 drückt. Sind die Mitnehmer 37 nicht koaxial zu den Bohrungen 47 im ersten Zahnrad 12 ausgerichtet, liegen die Mitnehmer 37 zunächst an der Stirnseite 79 des ersten Zahnrads 12 an, bis das erste Zahnrad 12 so weit weitergedreht ist, bis die Mitnehmer 37 in die Bohrungen 47 einrasten. Während die Mitnehmer 37 an der Stirnseite 79 anliegen, ist die Feder 35 gespannt, da der Schaltgriff 9 bereits in der in Fig. 4 gezeigten Position, also in seiner der Spindel 10 zugewandten Endposition ist. Um eine vollständige Anlage der Schaltscheibe 18 an die Zahnräder 13 und 12 zu ermöglichen, liegt der Betätigungsabschnitt 38 des ersten Schiebers 27 am Absatz 44 in einem Abstand zur Stirnseite 32 an der Schaltscheibe 18 an. Der Betätigungsabschnitt 39 des zweiten Schiebers 28 liegt in der in Fig. 4 gezeigten Aussparung 45 an der Schaltscheibe 18 an, so daß der zweite Schieber 28 nicht über die Stirnseite 31 der Schaltscheibe 18 heraussteht.

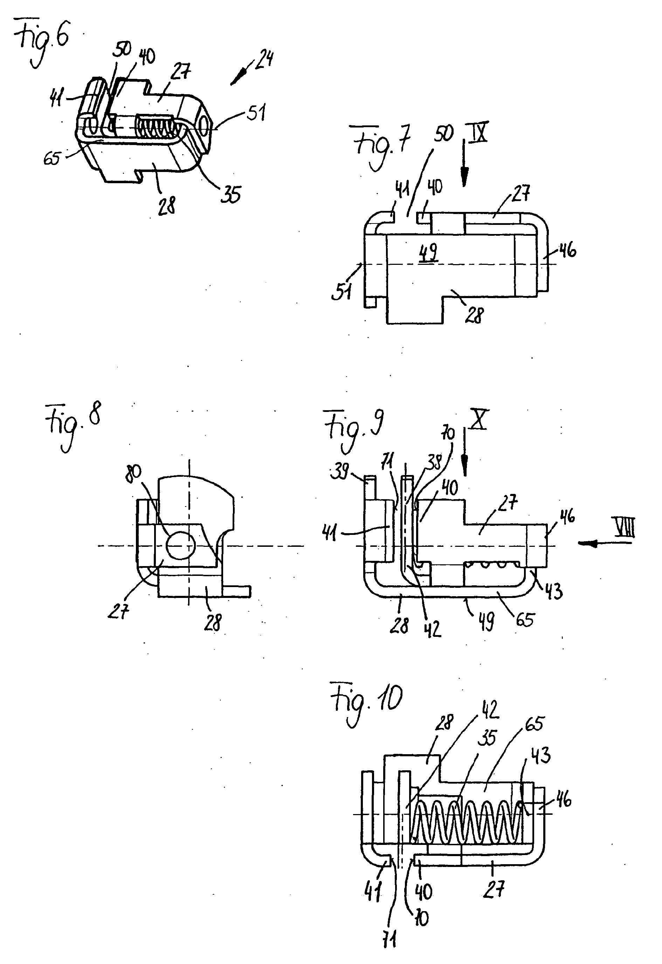

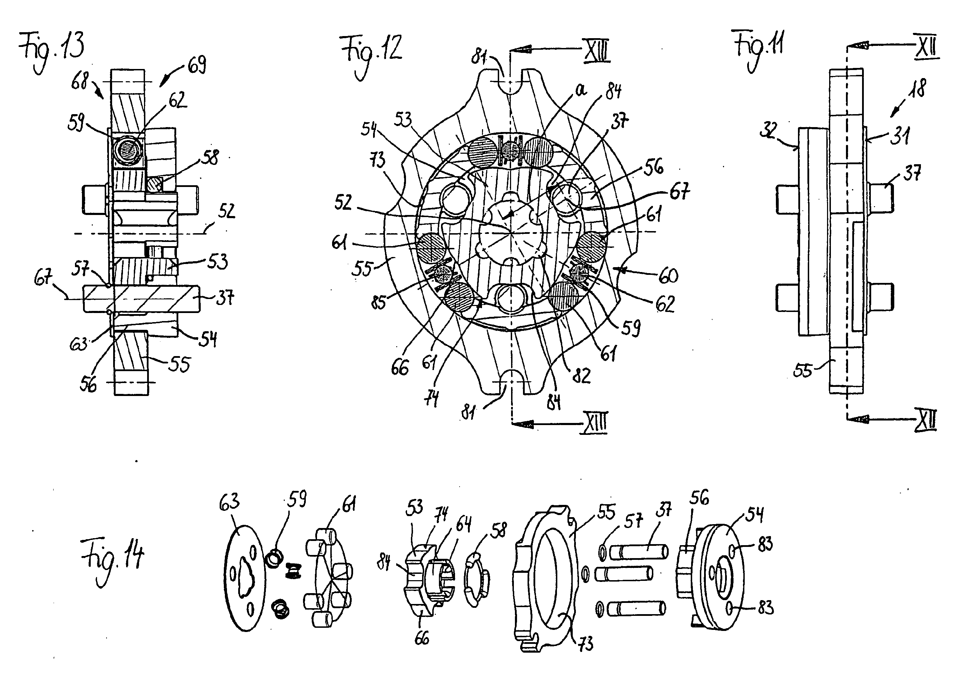

In den Fig. 6 bis 10 ist die Federung 24 gezeigt. Wie insbesondere Fig. 6 zeigt, ist der zweite Schieber 28 im wesentlichen U-förmig ausgebildet. Die Gleitfläche 49 ist dabei am Boden 65 des U ausgebildet. An einem ersten Schenkel des U ist der Betätigungsabschnitt 39 ausgebildet, wie insbesondere Fig. 9 zeigt. Am zweiten Schenkel des U ist der Druckabschnitt 43 angeordnet. Im Inneren des U ist die Feder 35 in Richtung einer Längsachse 51 angeordnet. Die Längsachse 51 bezeichnet dabei die Richtung, in der die Federung 24 wirkt. Wie insbesondere Fig. 10 zeigt, ist an der der Feder 35 abgewandten Seite des Druckabschnitts 43 der Anschlag 46 angeordnet, der einteilig mit dem ersten Schieber 27 ausgebildet ist. Der erste Schieber 27 verläuft im Bereich der Feder 35 etwa parallel zur Längsachse 51 und ist gegenüber dem Boden 65 um 90° um die Längsachse 51 gedreht. An dem parallel zur Längsachse 51 verlaufenden Abschnitt ist der Schaltabschnitt 40 angeformt (Fig. 7). Im Bereich des Schaltabschnitts 40 ist der erste Schieber 27 abgewinkelt und verläuft parallel zum Boden 65 des zweiten Schiebers 28. An dem abgewinkelten Abschnitt ist der Druckabschnitt 42 angeformt, der senkrecht zur Längsachse 51 verläuft (Fig. 9). An den Druckabschnitt 42 schließt sich der Betätigungsabschnitt 38 an. Im Bereich der Längsachse 51 besitzt die Federung 24 eine in Fig. 8 gezeigte durchgehende Bohrung 80, durch die die Führung 36 ragt. An den Schaltabschnitten 40 und 41 sind Schaltflächen 70 und 71 ausgebildet, die parallel zueinander verlaufen und zwischen denen ein Spalt 50 gebildet ist, in den der Zapfen 26 des Schaltgriffs 9 ragt. Beim Umschalten des Schaltgriffs 8 gleitet der Zapfen 26 an den Schaltflächen 70 und 71 entlang.

In den Fig. 11 bis 14 ist die Schaltscheibe 18 dargestellt. In die Schaltscheibe 18 ist eine Mitnahmevorrichtung integriert. Die Schaltscheibe 18 besitzt einen Außenring 55, der an seinem Außenumfang zwei gegenüberliegend angeordnete Schlitze 81 besitzt. An den Schlitzen 81, die den in Fig. 2 gezeigten Bohrungen 20 entsprechen, ist der Außenring 55 am Gehäuse 2 der Bohrmaschine 1 drehfest gelagert. Wie Fig. 12 zeigt, besitzt die Mitnahmevorrichtung drei Rollenpaare 60, die aus jeweils zwei Rollen 61 gebildet sind. Zwischen den beiden Rollen 61 eines Rollenpaares 60 ist jeweils eine Feder 59 gelagert. In der Feder 59 ist eine Kugel 62 zur Begrenzung des Wegs, um den die Feder 59 zusammengedrückt werden kann, angeordnet. Die Rollen 61 sind am Innenumfang 73 des Außenrings 55 geführt. Die Rollenpaare 60 sind dabei zwischen dem Außenring 55 und einem Innenelement 53 angeordnet, an dessen Außenumfang 74 sie an einer Nockenkontur 66 anliegen. Die Nockenkontur 66 ist dabei so ausgebildet, daß der Abstand der Nockenkontur 66 zur Drehachse 52 in Richtung auf den Mittelpunkt 85 des Rollenpaars 60 abnimmt und nach außen zunimmt.

Zwischen den Rollenpaaren 60 sind Druckstücke 56 angeordnet, die mit einem Antriebsring 54 drehfest verbunden sind. Der Antriebsring 54 besitzt, wie in Fig. 14 gezeigt, Bohrungen 83, durch die die Stifte 37 ragen. Die Stifte 37 sind somit mit dem Antriebsring 54 drehfest verbunden. Die Stifte 37 sind in Ausnehmungen 84 am Außenumfang 74 des Innenelements 53 angeordnet. Die Längsmittelachse 67 der Stifte 37 besitzt dabei zur Drehachse 52 einen Abstand a (Fig. 12). Die Erstreckung der Ausnehmungen 84 in Umfangsrichtung zur Drehachse 52 ist größer als der Durchmesser der Stifte 37, so daß die Stifte 37 gegenüber dem Innenelement 53 um die Drehachse 52 beweglich sind.

Bei einer Drehung der Abtriebswelle 33 wird die Drehung über die Verzahnung 34 der Abtriebswelle 33 und eine Verzahnung 82 am Innenelement 53 auf das Innenelement 53 übertragen. Das Innenelement 53 wird um die Drehachse 52 gedreht. Dabei wird eine Kugel 61 jedes Rollenpaars 60 in Richtung auf den Mittelpunkt 85 des Rollenpaars 60 zubewegt und die andere Rolle 61 vom Mittelpunkt 85 weg an den Rand. Da der Abstand der Nockenkontur 66 zum Innenumfang 73 des Außenrings 55 in Richtung auf den Rand des Rollenpaars 60 abnimmt, wird eine Rolle 61 zwischen dem Innenelement 53 und dem Außenring 55 eingeklemmt. Das Innenelement 53 wird dadurch blockiert. Beim Drehen der Mitnehmer 37 und damit des Antriebsrings 54 wird jeweils eine Rolle 61 eines Rollenpaars 60 von einem Druckstück 56 in Richtung auf den Mittelpunkt 85 des Rollenpaars 60 gedrückt. Ein Einklemmen einer Rolle 61 ist hierdurch vermieden, so daß der Antriebsring 54 nicht blockiert wird. Der Antriebsring 54 kann sich frei drehen, bis die Stifte 37 am Rand der Ausnehmung 84 anliegen und dadurch das Innenelement 53 mitnehmen. Das Drehmoment von den Stiften 37 wird dadurch auf das Innenelement 53 übertragen.

Wie die Fig. 13 und 14 zeigen, liegt der Antriebsring 54 an einer Seite 69 am Außenring 55 an und ragt mit seinen Druckstücken 56 in den Außenring 55. Auf der gegenüberliegenden Seite 68 ist am Außenring 55 eine Scheibe 63 angeordnet. Die Stifte 37 sind über Sprengringe 57 an der Scheibe 63 gehalten. Die Scheibe 63 kann jedoch auch auf andere Weise fixiert werden, beispielsweise durch Anschweißen oder dergleichen. Das Innenelement 53 besitzt Stege 64, die den Antriebsring 54 durchragen. Am Außenumfang der Stege 64 ist ein Dämpfungselement 58 angeordnet.

Es kann auch zweckmäßig sein, eine anders ausgebildete Mitnahmevorrichtung in den Schaltring 18 zu integrieren. Es kann zweckmäßig sein, zur Federung der Schaltscheibe 18 mehrere Federn und Schieber vorzusehen, beispielsweise für jede Schieberichtung eine Feder und zwei Schieber.

## Patentansprüche

1. Handwerkzeugmaschine mit einem Gehäuse (2), in dem ein Motor angeordnet ist, der über ein Getriebe (7) eine Spindel (10) rotierend antreibt, wobei das Getriebe (7) eine Schaltscheibe (18) besitzt, die über eine Schaltvorrichtung zwischen zwei Schaltstellungen (29, 30) verschiebbar ist, und die Schaltscheibe (18) in mindestens einer Schaltstellung (29, 30) drehfest mit einem Zahnrad (12, 13) verbunden ist, wobei zur drehfesten Verbindung der Schaltscheibe (18) mit dem Zahnrad (12, 13) mindestens ein Mitnehmer vorgesehen ist, der in Richtung der Drehachse (52) des Zahnrads (12, 13) ausgerichtet und in einem radialen Abstand (a) zur Drehachse (52) des Zahnrads (12, 13) angeordnet ist, wobei die Schaltvorrichtung über eine Federung (24) auf die Schaltscheibe (18) wirkt, **dadurch gekennzeichnet, daß** die Schaltscheibe (18) eine Mitnahmevorrichtung besitzt, die ein Drehmoment von den Mitnehmern auf eine Abtriebswelle (33) des Getriebes (7) überträgt und bei einem Drehmoment von der Abtriebswelle (33) die Abtriebswelle (33) blockiert.

2. Handwerkzeugmaschine nach Anspruch 1,
**dadurch gekennzeichnet, daß** die Federung (24) außerhalb der Schaltscheibe (18) angeordnet ist.

3. Handwerkzeugmaschine nach Anspruch 2,
**dadurch gekennzeichnet, daß** die Federung (24) radial außerhalb der Schaltscheibe (18) angeordnet ist.

4. Handwerkzeugmaschine nach einem der Ansprüche 1 bis 3,
**dadurch gekennzeichnet, daß** die Federung (24) eine Feder (35) umfaßt, die zwischen zwei in Richtung der Drehachse (52) beweglichen Schiebern (27, 28) gelagert ist.

5. Handwerkzeugmaschine nach Anspruch 4,
**dadurch gekennzeichnet, daß** ein erster Schieber (27, 28) einen Betätigungsabschnitt (38, 39), der auf eine Seite (68, 69) der Schaltscheibe (18) wirkt und einen Druckabschnitt (42, 43), an dem die Feder (35) angreift, besitzt.

6. Handwerkzeugmaschine nach Anspruch 4 oder 5,
**dadurch gekennzeichnet, daß** ein zweiter Schieber (27, 28) einen Schaltabschnitt (40, 41), auf den die Schaltvorrichtung wirkt, und einen Druckabschnitt (42, 43), an dem die Feder (35) angreift, besitzt.

7. Handwerkzeugmaschine nach einem der Ansprüche 4 bis 6,
**dadurch gekennzeichnet, daß** die Feder (35) eine Druckfeder ist.

8. Handwerkzeugmaschine nach einem der Ansprüche 4 bis 7,
**dadurch gekennzeichnet, daß** die Feder (35) und die Schieber (27, 28) an einer gehäusefesten Führung (19) gelagert sind.

9. Handwerkzeugmaschine nach einem der Ansprüche 4 bis 8,
**dadurch gekennzeichnet, daß** an einem Schieber (28) eine Gleitfläche (49) ausgebildet ist, mit der sich der Schieber (28) am Gehäuse (2) abstützt.

10. Handwerkzeugmaschine nach einem der Ansprüche 4 bis 9,
**dadurch gekennzeichnet, daß** zwei Schieber (27, 28) vorgesehen sind, wobei jeder Schieber einen Betätigungsabschnitt (38, 39), einen Druckabschnitt (42, 43) und einen Schaltabschnitt (40, 41) besitzt.

11. Handwerkzeugmaschine nach Anspruch 10,
**dadurch gekennzeichnet, daß** zwischen den Schaltabschnitten (40, 41) der beiden Schieber (27, 28) ein Spalt (50) gebildet ist, in den ein Zapfen (26) der Schaltvorrichtung greift.

12. Handwerkzeugmaschine nach einem der Ansprüche 1 bis 11,
**dadurch gekennzeichnet, daß** die Schaltvorrichtung ein drehbar gelagertes Schaltelement und einen Zapfen (26) umfaßt, wobei der Zapfen (26) exzentrisch zur Drehachse (72) des Schaltelements angeordnet ist.

13. Handwerkzeugmaschine nach Anspruch 12,
**dadurch gekennzeichnet, daß** der Schaltabschnitt (40, 41) eine etwa senkrecht zur Drehachse (72) des Schaltelements ausgerichtete Schaltfläche (70, 71) besitzt.

14. Handwerkzeugmaschine nach einem der Ansprüche 1 bis 13,
**dadurch gekennzeichnet, daß** die Schaltscheibe (18) in einer ersten Schaltstellung (29) mit einem ersten Zahnrad (12) und in der zweiten Schaltstellung (30) mit einem zweiten Zahnrad (30) verbunden ist.

15. Handwerkzeugmaschine nach einem der Ansprüche 1 bis 14,
**dadurch gekennzeichnet, daß** der Mitnehmer an der Schaltscheibe (18) angeordnet ist.

16. Handwerkzeugmaschine nach Anspruch 15,
**dadurch gekennzeichnet, daß** der Mitnehmer die Schaltscheibe (18) durchragt und an beiden Seiten (68, 69) der Schaltscheibe (18) über die Stirnseiten (31, 32) der Schaltscheibe (18) übersteht.

17. Handwerkzeugmaschine nach einem der Ansprüche 1 bis 16,
**dadurch gekennzeichnet, daß** der Mitnehmer ein Stift (37) ist.

18. Handwerkzeugmaschine nach einem der Ansprüche 1 bis 17,
**dadurch gekennzeichnet, daß** drei Mitnehmer an der Schaltscheibe (18) festgelegt sind.

19. Handwerkzeugmaschine nach einem der Ansprüche 1 bis 18,
**dadurch gekennzeichnet, daß** die Schaltscheibe (18) einen Außenring (55) besitzt, der am Gehäuse (2) der Handwerkzeugmaschine drehfest gehalten ist.

20. Handwerkzeugmaschine nach einem der Ansprüche 1 bis 19,
**dadurch gekennzeichnet, daß** die Schaltscheibe (18) ein Innenelement (53) besitzt, das mit der Abtriebswelle (33) über eine Verzahnung (34) drehfest verbunden ist.

21. Handwerkzeugmaschine nach einem der Ansprüche 1 bis 20,
**dadurch gekennzeichnet, daß** die Schaltscheibe (18) einen Antriebsring (54) besitzt, der mit den Mitnehmern drehfest verbunden ist.

22. Handwerkzeugmaschine nach einem der Ansprüche 1 bis 21,
**dadurch gekennzeichnet, daß** die Mitnahmevorrichtung mindestens ein Rollenpaar (60) umfaßt, wobei die beiden Rollen (61) des Rollenpaars (60) in Umfangsrichtung zur Drehachse (52) benachbart zueinander angeordnet sind und am Innenumfang (73) des Außenrings (55) und an einer am Außenumfang (74) des Innenelements (53) gebildeten Nockenkontur (66) anliegen und zwischen den Rollen (61) des Rollenpaares (60) eine Feder (59) angeordnet ist.

23. Handwerkzeugmaschine nach Anspruch 22,
**dadurch gekennzeichnet, daß** in Umfangsrichtung zur Drehachse (52) benachbart zu dem Rollenpaar (60) Druckstücke (56) angeordnet sind, die drehfest mit dem Antriebsring (54) verbunden sind.

## Claims

1. Portable power tool with a housing (2), in which a motor is arranged which drives a spindle (10) in rotation by means of a gear (7), whereby the gear (7) comprises a switching disc (18) which is adapted to be displaced between two switching positions (29, 30) by means of a switching device, and the switching disc (18) is connected in at least one switching position (29, 30) in a rotationally secure way to a gearwheel (12, 13), whereby at least one driving element is provided for the rotationally secure connection of the switching disc (18) to the gearwheel (12, 13), said driving element being orientated in the direction of the rotation axis (52) of the gearwheel (12, 13) and arranged at a radial distance (a) from the rotation axis (52) of the gearwheel (12, 13), whereby the switching device acts on the switching disc (18) via a spring suspension (24), **characterised in that** the switching disc (18) has a driving device which transfers a torque from the driving elements to an output shaft (33) of the gear (7) and in the event of a torque from the output shaft (33) locks the output shaft (33).

2. Portable power tool according to claim 1,
**characterised in that** the spring suspension (24) is arranged outside of the switching disc (18).

3. Portable power tool according to claim 2,
**characterised in that** the spring suspension (24) is arranged radially outside of the switching disc (18).

4. Portable power tool according to one of the claims 1 to 3,
**characterised in that** the spring suspension (24) comprises a spring (35) which is mounted between two sliders (27, 28) which are adapted to be moved in the direction of the rotation axis (52).

5. Portable power tool according to claim 4,
**characterised in that** a first slider (27, 28) has an actuating section (38, 39) which acts on one side (68, 69) of the switching disc (18) and a pressure section (42, 43), on which the spring (35) engages.

6. Portable power tool according to claim 4 or 5,
**characterised in that** a second slider (27, 28) has a switching section (40, 41), on which the switching device acts, and a pressure section (42, 43), on which the spring (35) engages.

7. Portable power tool according to one of the claims 4 to 6,
**characterised in that** the spring (35) is a compression spring.

8. Portable power tool according to one of the claims 4 to 7,
**characterised in that** the spring (35) and the sliders (27, 28) are mounted on a housing-remote guide (19).

9. Portable power tool according to one of the claims 4 to 8,
**characterised in that** a sliding surface (49) is formed on a slider (28), with which the slider (28) rests on the housing (2).

10. Portable power tool according to one of the claims 4 to 9,
**characterised in that** two sliders (27, 28) are provided, whereby each slider has an actuating section (38 39), a pressure section (42, 43) and a switching section (40, 41).

11. Portable power tool according to claim 10,
**characterised in that** a gap (50) is formed between the switching sections (40, 41) of the two sliders (27, 28), into which a neck element (26) of the switching device engages.

12. Portable power tool according to one of the claims 1 to 11,
**characterised in that** the switching device comprises a switching element mounted so as to be rotatable and a neck element (26), whereby the neck element (26) is arranged eccentrically with respect to the rotation axis (72) of the switching element.

13. Portable power tool according to claim 12,
**characterised in that** the switching section (40, 41) has a switching surface (70, 71) orientated perpendicularly to the rotation axis (72) of the switching element.

14. Portable power tool according to one of the claims 1 to 13,
**characterised in that** the switching disc (18) is connected in a first switching position (29) to a first gearwheel (12) and in the second switching position (30) to a second gearwheel (30).

15. Portable power tool according to one of the claims 1 to 14,
**characterised in that** the driving element is arranged on the switching disc (18).

16. Portable power tool according to claim 15,
**characterised in that** the driving element projects through the switching disc (18) and projects on both sides (68, 69) of the switching disc (18) over the end faces (31, 32) of the switching disc (18).

17. Portable power tool according to one of the claims 1 to 16,
**characterised in that** the driving element is a pin (37).

18. Portable power tool according to one of the claims 1 to 17,
**characterised in that** three driving elements are fixed to the switching disc (18).

19. Portable power tool according to one of the claims 1 to 18,
**characterised in that** the switching disc (18) has an outer ring (55) which is held on the housing (2) of the portable power tool in a rotationally secure way.

20. Portable power tool according to one of the claims 1 to 19,
**characterised in that** the switching disc (18) has an inner element (53) which is connected in a rotationally secure way to the output shaft (33) by means of toothing (34).

21. Portable power tool according to one of the claims 1 to 20,
**characterised in that** the switching disc (18) has a drive ring (54) which is connected in a rotationally secure way to the driving elements.

22. Portable power tool according to one of the claims 1 to 21,
**characterised in that** the driving device comprises at least one pair of rollers (60), whereby the two rollers (61) of the pair of rollers (60) are orientated so as to be adjacent to each other in the peripheral direction with respect to the rotation axis (52) and lie on the inner periphery (73) of the outer ring (55) and on a cam contour (66) formed on the outer periphery (74) of the inner element (53).

23. Portable power tool according to claim 22,
**characterised in that** pressure elements (56) are arranged adjacent to the pair of rollers (60) in the peripheral direction with respect to the rotation axis (52), whereby said pressure elements (56) are connected in a rotationally secure way to the drive ring (54).

## Revendications

1. Outil portable comprenant un boîtier (2), dans lequel est disposé un moteur, entraînant en rotation, par l'intermédiaire d'une transmission (7), une broche (10), la transmission (7) comprenant un disque de commutation (18) déplaçable, par l'intermédiaire d'un dispositif de commutation, entre deux positions de commutation (29, 30), et le disque de commutation (18) étant relié en au moins une position de commutation (29, 30) de façon assujettie en rotation à une roue dentée (12, 13), sachant que, pour assurer une liaison assujettie en rotation du disque de commutation (18) à la roue dentée (12, 13), est prévu au moins un organe d'entraînement, orienté dans la direction de l'axe de rotation (52) de la route dentée (12, 13) et disposé, à un espacement (a) radial par rapport à l'axe de rotation (52) de la roue dentée (12, 13), le dispositif de commutation agissant, par l'intermédiaire d'un montage élastique (24), sur le disque de commutation (18), **caractérisé en ce que** le disque de commutation (18) comprend un dispositif d'entraînement transmettant un couple de rotation, des organes d'entraînement à un arbre mené (33) de la transmission (7) et bloquant l'arbre mené (33), dans le cas où un couple de rotation provient de l'arbre mené (33).

2. Outil portable selon la revendication 1, **caractérisé en ce que** le montage élastique (24) est disposé à l'extérieur du disque de commutation (18).

3. Outil portable selon la revendication 2, **caractérisé en ce que** le montage élastique (24) est disposé radialement à l'extérieur du disque de commutation (18).

4. Outil portable selon l'une des revendications 1 à 3, **caractérisé en ce que** le montage élastique (24) comprend un ressort (35), monté entre deux coulisseaux (27, 28) mobiles en direction de l'axe de rotation (52).

5. Outil portable selon la revendication 4, **caractérisé en ce qu'**un premier coulisseau (27, 28) comprend un tronçon d'actionnement (38, 39), agissant sur un côté (68, 69) du disque de commutation (18), et comprend un tronçon de pressage (42, 43) sur lequel agit le ressort (35).

6. Outil portable selon la revendication 4 ou 5, **caractérisé en ce qu'**un deuxième coulisseau (27, 28) comprend un tronçon de commutation (40, 41), sur lequel agit le dispositif de commutation, et comprend un tronçon de pressage (42, 43), sur lequel agit le ressort (35).

7. Outil portable selon l'une des revendications 4 à 6, **caractérisé en ce que** le ressort (35) est un ressort de compression.

8. Outil portable selon l'une des revendications 4 à 7, **caractérisé en ce que** le ressort (35) et les coulisseaux (27, 28) sont montés sur un guidage (19) fixé au boîtier.

9. Outil portable selon l'une des revendications 4 à 8, **caractérisé en ce que**, sur un coulisseau (29), est réalisée une surface de glissement (49) par laquelle le coulisseau (28) prend appui sur le boîtier (2).

10. Outil portable selon l'une des revendications 4 à 9, **caractérisé en ce que** deux coulisseaux (27, 28) sont prévus, chaque coulisseau comprenant un tronçon d'actionnement (38, 39), un tronçon de pressage (42, 43) et un tronçon de commutation (40, 41).

11. Outil portable selon la revendication 10, **caractérisé en ce que**, entre les tronçons de commutation (40, 41) des deux coulisseaux (27, 28), est formé un intervalle (50), dans lequel s'engage un tourillon (26) du dispositif de commutation.

12. Outil portable selon l'une des revendications 1 à 11, **caractérisé en ce que** le dispositif de commutation comprend un élément de commutation monté à rotation et un tourillon (26), le tourillon (26) étant disposé de façon excentrique par rapport à l'axe de rotation (72) de l'élément de commutation.

13. Outil portable selon la revendication 12, **caractérisé en ce que** le tronçon de commutation (40, 41) comprend une surface de commutation (70, 71), orientée à peu près perpendiculairement par rapport à l'axe de rotation (72) de l'élément de commutation.

14. Outil portable selon l'une des revendications 1 à 13, **caractérisé en ce que** le disque de commutation (18) est relié, en une première position de commutation (29), à une première roue dentée (12) et est relié, à la deuxième position de commutation (30), à une deuxième roue dentée (30).

15. Outil portable selon l'une des revendications 1 à 14, **caractérisé en ce que** l'organe d'entraînement est disposé sur le disque de commutation (18).

16. Outil portable selon la revendication 15, **caractérisé en ce que** l'organe d'entraînement traverse le disque de commutation (18) et ressort des deux côtés (68, 69) du disque de commutation (18), sur les faces frontales (31, 32) du disque de commutation (18).

17. Outil portable selon l'une des revendications 1 à 16, **caractérisé en ce que** l'organe d'entraînement est un téton (37).

18. Outil portable selon l'une des revendications 1 à 17, **caractérisé en ce que** trois organes d'entraînement sont fixés sur le disque de commutation (18).

19. Outil portable selon l'une des revendications 1 à 18, **caractérisé en ce que** le disque de commutation (18) comprend une bague extérieure (55), maintenue de façon assujettie en rotation sur le boîtier (2) de l'outil portatif.

20. Outil portable selon l'une des revendications 1 à 19, **caractérisé en ce que** le disque de commutation (18) comprend un élément intérieur (53), relié de façon assujettie en rotation à l'arbre mené (33), par l'intermédiaire d'une denture (34).

21. Outil portable selon l'une des revendications 1 à 20, **caractérisé en ce que** le disque de commutation (18) comprend une bague d'entraînement (54), reliée de façon assujettie en rotation aux organes d'entraînement.

22. Outil portable selon l'une des revendications 1 à 21, **caractérisé en ce que** le dispositif d'entraînement comprend au moins une paire de galets (60), les deux galets (61) de la paire de galets (60) étant disposés au voisinage l'un de l'autre dans la direction périphérique par rapport à l'axe de rotation (52) et appuient sur la périphérie intérieure (73) de la bague extérieure (55) et sur un contour en came (66), formé sur la périphérie extérieure (74) de l'élément intérieur (53), et un ressort (59) est disposé entre les galets (61) de la paire de galets (60).

23. Outil portable selon la revendication 22, **caractérisé en ce que**, en direction périphérique, au voisinage de la paire de galets par rapport à l'axe de rotation (52) sont disposées des pièces de pressage (56), reliées de façon assujettie en rotation à la bague d'entraînement (54).
